(19) Europäisches Patentamt
European Patent Office
Office européen des brevets

(11) Veröffentlichungsnummer: **0 024 261**
**A1**

(12) **EUROPÄISCHE PATENTANMELDUNG**

(21) Anmeldenummer: **80810250.3**

(22) Anmeldetag: **11.08.80**

(51) Int. Cl.³: **C 09 B 63/00**
C 09 B 29/36, C 08 K 5/00

(30) Priorität: **17.08.79 CH 7559/79**

(43) Veröffentlichungstag der Anmeldung: **25.02.81 Patentblatt 81/8**

(84) Benannte Vertragsstaaten: **CH DE FR GB IT LI**

(71) Anmelder: **CIBA-GEIGY AG**
**Patentabteilung Postfach**
**CH-4002 Basel(CH)**

(72) Erfinder: **Rouèche, Armand, Dr.**
**Lerchenstrasse 38**
**CH-4103 Bottmingen(CH)**

(54) **Azopigmente und Verfahren zu deren Herstellung und Verwendung.**

(57) Azopigmente der Formel

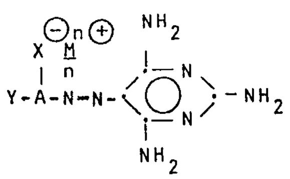

(1)

worin A einen Benzolrest, X eine $SO_3$- oder $CO_2$-Gruppe, Y einen nichtwasserlöslichmachenden Substituenten und M ein ein- oder zweiwertiges Metallatom und n die Zahl 1 oder 2 bedeuten. Als nicht-wasserlöslichmachenden Substituenten seien genannt: Halogen, z.B. Chlor oder Brom, Methyl, Alkoxy mit 1-4 C, Cyan, Alkanoylamino mit 1-4 C insbesondere aber Nitro- und Trifluormethyl. Ausser den genannten kann der Benzolrest A noch weitere Substituenten, beispielsweise Chloratome oder Methylgruppen aufweisen. Als Metalle kommen einwertige Metalle, wie die Alkalimetalle, z.B. Na, K oder Li, insbesondere aber zweiwertige Metalle, wie Mg, Ca, Sr, Ba, Mn, Co, Ni, Cu oder Zn in Betracht, wobei M auch Mischungen solcher Metalle umfassen kann. Mit den neuen Pigmenten erhält man gelb bei rot gefärbte Kunststoffe von vorzüglicher Licht-Migrations- und Wetterechtheit und Hitzebeständigkeit.

EP 0 024 261 A1

Croydon Printing Company Ltd.

CIBA-GEIGY AG
Basel (Schweiz)

3-12481/+

Azopigmente und Verfahren zu deren Herstellung und Verwendung.

Die Erfindung betrifft neue wertvolle Azopigmente der Formel

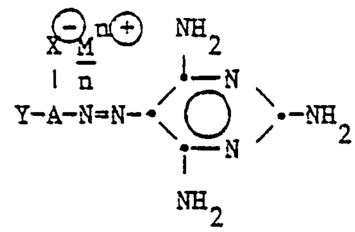

(I)

worin A einen Benzolrest, X eine $SO_3$- oder $CO_2$-Gruppe, Y einen nicht-wasserlöslichmachenden Substituenten und M ein ein- oder zweiwertiges Metallatom und n die Zahl 1 oder 2 bedeuten.

Als nicht-wasserlöslichmachenden Substituenten seien genannt: Halogen, z.B. Chlor oder Brom, Methyl, Alkoxy mit 1-4 C, Cyan, Alkanoylamino mit 1-4 C insbesondere aber Nitro- und Trifluormethyl. Ausser den genannten kann der Benzolrest A noch weitere Substituenten, beispielsweise Chloratome oder Methylgruppen aufweisen.

Als Metalle kommen einwertige Metalle, wie die Alkalimetalle, z.B. Na, K oder Li, insbesondere aber zweiwertige Metalle, wie Mg, Ca, Sr, Ba, Mn, Co, Ni, Cu oder Zn in Betracht, wobei M auch Mischungen solcher Metalle umfassen kann.

Von besonderem Interesse sind Pigmente der Formel

BAD ORIGINAL

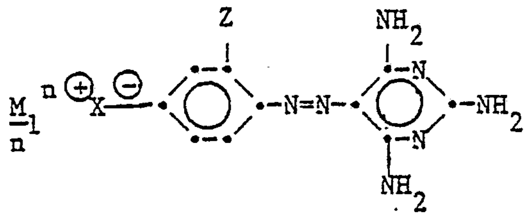

(III)

worin Z eine Trifluormethyl oder insbesondere eine Nitrogruppe, X eine $SO_3$- oder $CO_2$-Gruppe und $M_1$. Na, K, Ba, Ca, Mg, Ni oder Co und n 1 oder 2 bedeuten.

Zu den Pigmenten der Formel I gelangt man durch Umsetzen einer Verbindung der Formel

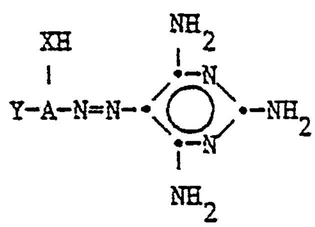

(IV)

mit Mitteln, die ein- oder zweiwertige Metalle abgeben.

Die Verbindung der Formel IV ihrerseits erhält man durch Kuppeln einer Diazoverbindung des Amins der Formel

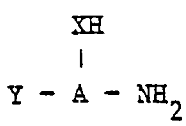

(V)

insbesondere einem solchen der Formel

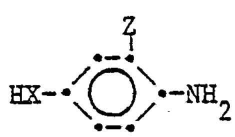

(VI)

mit 2,4,6-Triaminopyrimidin.

Als Beispiele seien die folgenden Amine genannt:

2-Chloranilin-5-sulfonsäure
4-Chloranilin-2-sulfonsäure
4-Methylanilin-2-sulfonsäure
4-Methoxyanilin-2-sulfonsäure
4-Chlor-5-methylanilin-2-sulfonsäure
4-Methyl-5-chloranilin-2-sulfonsäure
4-Acetylaminoanilin-2-sulfonsäure
2-Acetylaminoanilin-6-sulfonsäure
4-Trifluormethylanilin-2-sulfonsäure
5-Trifluormethylanilin-2-sulfonsäure
2-Trifluormethylanilin-4-sulfonsäure
3-Trifluormethyl-4-chloranilin-6-sulfonsäure
4-Nitroanilin-2-sulfonsäure
2-Nitroanilin-4-sulfonsäure
3-Nitro-4-amino-benzoesäure

Die Diazotierung der Aminobenzolsulfonsäuren- bzw. -carbonsäuren erfolgt in der üblichen Weise mit Natriumnitrit in mineralsaurem wässrigem Medium und die Kupplung wird mit Vorteil in schwach saurem bis alkalischem Milieu durchgeführt.

Die Metallisierung erfolgt vorzugsweise durch Umsetzen der Azofarbstoffsulfon- oder carbonsäuren , vorzugsweise mit den wasserlöslichen Salzen der erwähnten Metalle in wässriger Lösung oder Suspension, gegebenenfalls in Gegenwart organischer Lösungsmittel, wie aliphatischer Alkohole, Ketone, Aether oder Carbonsäureamide , bei erhöhter Temperatur, vorzugsweise zwischen 65 und 100°C.

Die Metallisierung kann auch in Gegenwart einer der üblichen Trägersubstanzen bzw. Substrate, wie Aluminiumoxyd, Titandioxyd, Bariumsulfat oder Bleisulfat erfolgen.

Gegenüber dem nächst vergleichbaren Stand der Technik, nämlich der im Chem. Pharma Bull. 7 Seite 1-6 (1959) beschriebenen Verbindung der Formel

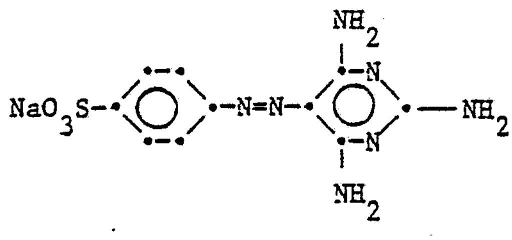

zeichnen sich die erfindungsgemässen Pigmente durch eine bedeutend bessere Licht- und Wetterechtheit aus.

Die neuen Pigmente eignen sich zum Pigmentieren von hochmolekularem organischem Material, thermoplastischen und duromeren Kunststoffen, wie Celluloseäthern und -estern, wie Aethylcellulose, Nitrocellulose, Celluloseacetat, Cellulosebutyrat, natürlichen Harzen oder Kunstharzen, wie Polymerisationsharzen oder Kondensationsharzen, z.B. Aminoplasten, insbesondere Harnstoff- und Melamin-Fomraldehydharzen, Alkylharzen, Phenoplasten, Polycarbonaten, Polyolefinen, wie Polystyrol, Polyvinylchlorid, Polyäthylen, Polypropylen, Polyacrylnitril, Polyacrylsäureestern, Polyamiden, Polyurethanen oder Polyestern, Gummi, Casein, Silikon und Silikonharzen einzeln oder in Mischungen.

Die erwähnten hochmolekularen Verbindungen können sowohl als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

Die erhaltenen Färbungen zeichnen sich durch vorzügliche Echtheiten, insbesondere Licht-, Migrations- und Wetterechtheit, sowie Hitzebeständigkeit aus.

BAD ORIGINAL

In den nachfolgenden Beispielen bedeuten die Teile, sofern nichts anderes angegeben wird, Gew.-Teile, die Prozente Gew.-Prozente und die Temperaturen in Celsiusgraden angegeben.

Beispiel 1: 48 Teile 2-Nitro-4-sulfonsäure-anilin werden mit 50 Volumenteilen Natronlauge 30%ig in 750 Volumenteilen Wasser bei 30 bis 35° gelöst und mit 1 Teil Entfärbungskohle filtriert. Zu der klaren Lösung gibt man rasch 110 Volumenteile Salzsäure 30%ig unter Rühren hinzu, kühlt die Suspension auf 0° und lässt bei 0 bis 5° in 15 Minuten 50 Volumenteile 4-N-Natriumnitrilösung zufliessen. Nach 15 Minuten ist die Diazotierung beendet. Man zerstört überschüssige salpetrige Säure mit Harnstoff oder Sulfaminsäure und stellt durch Zugabe von Natriumacetat die Diazosuspension auf einen $p_H$-Wert von 4 bis 4,5 ein. Dann lässt man in ca. 1 Stunde eine Lösung von 25 Teilen 2,4,6-Triaminopyrimidin-1,3 in 600 Volumenteilen Wasser zur Diazosuspension hinzufliessen. Die Temperatur des Reaktionsgemisches steigt dabei auf 15 bis 20°. Man rührt bis zur Beendigung der Kupplung und erwärmt dann die Mischung 1 Stunde auf 40 bis 45°. Man filtriert und wäscht mit Wasser möglichst salzfrei.

44 Teile des Filterrückstandes (16,5%iger wässeriger Paste, entspricht 7,2 Teile trockener Azofarbstoffsulfonsäure) werden dann in 260 Volumenteilen Wasser angeschlämmt, auf 70 bis 75°C erwärmt und die erhaltene Suspension mit $NH_4OH$ 25% auf einen pH-Wert von ca. 10 gestellt. Danach werden 2,0 Teile Magnesiumchloridhexahydrat in 30 Teilen Wasser gelöst zugegeben. Man rührt noch 10 Stunden bei 90 bis 95°C filtriert dann die Pigmentsuspension heiss und wäscht mit heissem Wasser bis im Filtrat keine Chlorionen mehr nachweisbar sind. Nach dem Trocknen bei 100° im Vakuum erhält man 6,3 Teile eines orangen Pigmentfarbstoffes der Formel

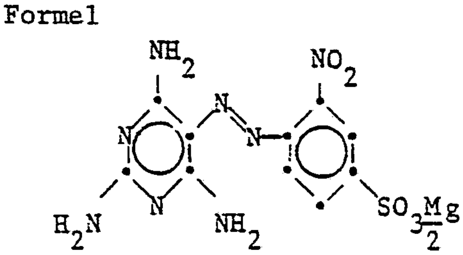

Das Pigment enthält 4 Mol Kristallwasser und zeigt folgende Elementar-Analyse:

| | | | |
|---|---|---|---|
| C% | 29,4 / 29,5 | Berechnet: | C% 29,92 |
| H% | 3,2 / 3,3 | (mit 4 Mol $H_2O$) | H% 3,26 |
| N% | 28,0 / 27,9 | | N% 27,91 |
| S% | 8,1 | | S% 7,99 |
| Mg% | 3,08 | | Mg% 3,03 |

Das Pigment färbt Polyvinylchlorid in roten Tönen von sehr guter Migrations- und Lichtechtheit.

Beispiel 2 bis 24: In der nachfolgenden Tabelle sind weitere Pigmente aufgeführt, die man erhält, wenn man die in Kolonne I aufgeführte Aminosulfonsäure diazotiert, mit 2,4,6-Triaminopyrimidin kuppelt und die erhaltene Azosulfonsäure bzw. -carbonsäure mit einem wasserlöslichen Salz des in Kolonne II genannten Metalles verlackt. Kolonne III gibt die Nuance der mit 0,2 % dieser Pigmente gefärbten erhaltenen PVC-Folie an.

Tabelle 1

| Nr. | Diazokomponente | Metall | Nuance |
|---|---|---|---|
| 2 | 2-Nitroanilin-4-sulfonsäure | Na | orange |
| 3 | " | K | orange |
| 4 | " | Li | rot-orange |
| 5 | " | Sr | orange |
| 6 | " | Ca | orange |
| 7 | " | Ba | orange |
| 8 | 2-Nitroanilin-4-carbonsäure | Na | orange |
| 9 | " | Ca | orange |
| 10 | " | Mg | orange |
| 11 | " | Ba | orange |
| 12 | " | Co | orange |
| 13 | " | Ni | orange |
| 14 | " | Cu | orange |
| 15 | 4-Nitroanilin-2-sulfonsäure | K | rot |
| 16 | " | Na | braun |
| 17 | 2,5-Dichloranilin-4-sulfonsäure | K | gelb |
| 18 | " | Mg | gelb |
| 19 | " | Ca | gelb |
| 20 | " | Sr | gelb |
| 21 | Anilin-2,4-disulfonsäure | Co | gelb |
| 22 | " | Zn | gelb |
| 23 | 3-Aminophthalsäure | Ni | gelb |
| 24 | " | Co | braun |

Beispiel 25: 0,6 g des nach Beispiel 1 hergestellten Pigments werden mit 67 g Polyvinylchlorid, 33 g Dioctylphthalat, 2 g Dibutylzinndilaurat und 2 g Titandioxyd zusammengemischt und auf einem Walzenstuhl während 15 Minuten bei 160° zu einer dünnen Folie verarbeitet. Die so erzeugte orange Färbung ist migrations- und lichtecht.

Beispiel 26: 15 g einer 35% Butanol enthaltenden Kollodiumwolle, 15 g eines mit Ricinusöl modifizierten Phatalatharzes, 15 g einer 70%-igen butanolischen Lösung eines Harnstofflackharzes, 20 g Butylacetat, 10 g Glykolmonoäthyläther, 20 g Toluol und 5 g Alkohol werden zu einem Lack verarbeitet. Dieser wird anschliessend mit 2 g des Farbstoffs gemäss Beispiel 1 und 2 g des Titandioxyd (Rutil) pigmentiert und gemahlen. Nach dem Spritzen auf Karton und Trocknen des Lackes erhält man einen orangen Ueberzug von sehr guter Licht-, Ueberlackier- und Wetterechtheit.

Beispiel 27: Zu 100 g eines Einbrennlackes, der aus 58,5 g einer 60%-igen Lösung eines Kokosalkydharzes (Beckosol 27/320) in Xylol, 23 g einer 65-igen Lösung eines Melaminlackharzes (Super Beckamin 13/501) in Butanol, 17 g Xylol und 1,5 g Butanol besteht, gibt man 1 g des Farbstoffes gemäss Beispiel 1 und 5 g Titandioxyd. Man mahlt das Gemisch 48 Stunden in einer Kugelmühle und spritzt den so pigmentierten Lack auf eine gereinigte Metalloberfläche. Nach dem Einbrennen bei 120° erhält man eine orange Färbung von guter Licht-, Ueberlackier- und Wetterechtheit.

Patentansprüche

1. Azopigmente der Formel

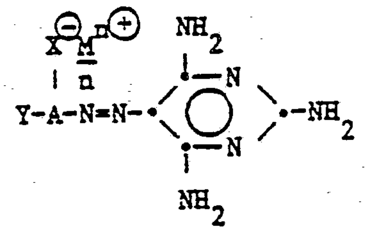 (I)

worin A einen Benzolrest, X eine $SO_3$- oder $CO_2$-Gruppe, Y einen nichtwasserlöslichmachenden Substituenten und M ein ein- oder zweiwertiges Metallatom und n die Zahl 1 oder 2 bedeuten.

2. Azopigmente gemäss Anspruch 1 der Formel

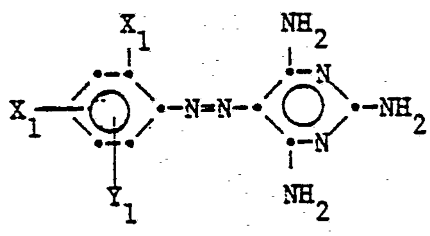

worin ein $X_1$ eine Nitro-,Chlor-, Sulfo- oder Trifluormethylgruppe und das andere $X_1$ eine Gruppe der Formel $-X^{\ominus}\frac{M}{n}^{n\oplus}$ worin X, M und n die im Anspruch 1 angegebene Bedeutung haben, $Y_1$ ein H, oder Chloratom, oder eine Methylgruppe bedeutet.

3. Azopigmente gemäss Anspruch 2 der Formel

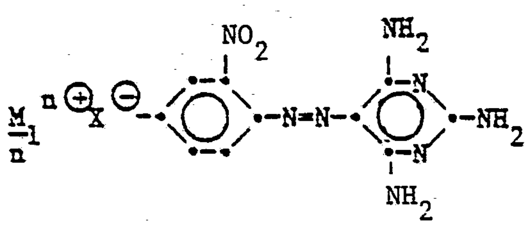 (III)

worin X eine $SO_3$- oder $CO_2$-Gruppe und $M_1$ Na, K, Ba, Ca, Mg, Ni oder Co und n 1 oder 2 bedeuten.

4. Azopigmente gemäss Anspruch 3, worin X eine $SO_3$ oder $CO_2$-Gruppe, $M_1$, Mg, Ca, Ba, Co, Ni, n=2 bedeuten.

5. Azopigmente gemäss Anspruch 2 der Formel

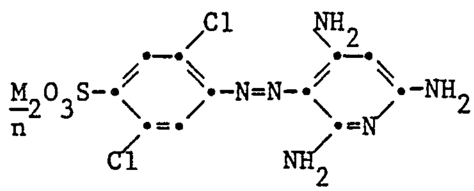

worin $M_2$ K, Mg, Ca oder Sr und n 1 oder 2 bedeuten.

6. Verfahren zur Herstellung eines Azopigmentes gemäss Anspruch 1, dadurch gekennzeichnet, dass man eine Verbindung der Formel

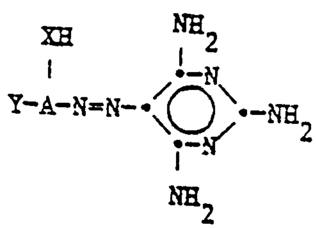

(IV)

mit Mitteln behandelt, die ein- oder zweiwertige Metalle abgeben.

7. Verfahren gemäss Anspruch 6, dadurch gekennzeichnet, dass man von Verbindungen der Formel

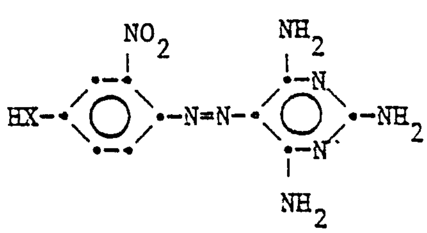

ausgeht, worin X eine $SO_3$- oder $CO_2$-Gruppe bedeutet.

8. Verfahren gemäss Anspruch 6, dadurch gekennzeichnet, dass

man als metallabgebende Mittel die Salze des Na, K, Ba, Ca, Mg, Ni oder Co verwendet.

9. Verfahren gemäss Anspruch 8, dadurch gekennzeichnet, dass man als metallabgebende Mittel die Salze des Mg, Ca, Ba, Co oder Ni verwendet.

10. Verfahren gemäss Anspruch 6, dadurch gekennzeichnet, dass man von der Sulfonsäure der Formel

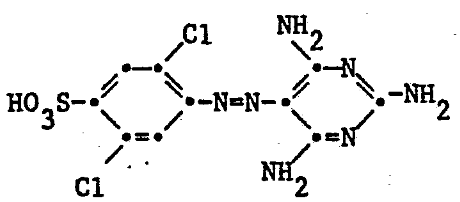

ausgeht.

11. Verfahren zur Pigmentierung von hochmolekularen organischen Materialien, gekennzeichnet durch die Verwendung der Metallsalze gemäss Anspruch 1.

12. Hochmolekulare organische Materialien enthaltend ein Metallsalz gemäss Anspruch 1.

0024261

Europäisches Patentamt

# EUROPÄISCHER RECHERCHENBERICHT

Nummer der Anmeldung
EP 80 81 0250

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | GB - A - 871 624 (AMERICAN CYANAMID)<br>* Anspruch 1; Beispiel 4 *<br>-- | 1 |
| A | FR - A - 1 184 402 (TAKEDA PHARMACEUTICAL INDUSTRIES)<br>* Zusammenfassung *<br>---- | 1 |

**KLASSIFIKATION DER ANMELDUNG (Int Cl ³)**

C 09 B 63/00
C 09 B 29/36
C 08 K 5/00

**RECHERCHIERTE SACHGEBIETE (Int. Cl.³)**

C 09 B 63/00
29/36

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 26-11-1980 | DELANGHE |